**Europäisches Patentamt**

**European Patent Office**

**Office européen des brevets**

(19)

(11) Veröffentlichungsnummer: **0 254 021**
**A2**

(12) **EUROPÄISCHE PATENTANMELDUNG**

(21) Anmeldenummer: **87108551.0**

(22) Anmeldetag: **13.06.87**

(51) Int. Cl.⁴: **B23B 5/16**

(30) Priorität: **24.07.86 CH 2969/86**

(43) Veröffentlichungstag der Anmeldung:
**27.01.88 Patentblatt 88/04**

(84) Benannte Vertragsstaaten:
**AT BE CH DE ES FR GB IT LI LU NL SE**

(71) Anmelder: **GEORG FISCHER AKTIENGESELLSCHAFT**
**Mühlentalstrasse 105**
**CH-8201 Schaffhausen(CH)**

(72) Erfinder: **Baumann, Gerhard**
**Breitenaustrasse 143**
**CH-8200 Schaffhausen(CH)**
Erfinder: **Kramer, Herbert**
**Libellenweg 62**
**D-7700 Singen(DE)**

(54) **Einrichtung zur Bearbeitung von Enden rohrförmiger Teile.**

(57) Eine Bearbeitungsvorrichtung (2) mit einem Schleifwerkzeug (27) ist drehbar an einer Innen-Spannvorrichtung (1) angeordnet, welche mittels Spannbacken (7) zentrisch zum Innendurchmesser des Rohres (3) an diesem festgespannt wird. Das Schleifwerkzeug (27) ist mit seiner Antriebswelle (24) und seinem Antriebsmotor (30) exzentrisch in einer mittels eines Schneckenantriebes (33) verschwenkbaren Büchse (23) gelagert. Durch deren Verschwenken wird das Schleifwerkzeug (27) auf die Bearbeitungstiefe an das Rohr (3) herangeführt, wobei anschliessend durch eine Umdrehung der Bearbeitungsvorrichtung (2) um die Innen-Spannvorrichtung (1) die Aussenbearbeitung am Rohr (3) erfolgt.

Fig. 1

EP 0 254 021 A2

## Einrichtung zur Bearbeitung von Enden rohrförmiger Teile

Die Erfindung betrifft eine Einrichtung zur Bearbeitung von Enden rohrförmiger Teile, wie sie im Oberbegriff von Anspruch 1 gekennzeichnet ist.

Zum Abtrennen von Rohren ist eine Einrichtung bekannt geworden (DE-C3-2503426), welche einen feststehenden, das Rohr am Aussenumfang spannenden Spannstock sowie ein um das Rohr bewegbares und dabei radial zustellbares rotierendes Trennwerkzeug aufweist.

Zur Herstellung von Rohrverbindungen bei faserverstärkten Kunststoffrohren, wie sie in der EP-A2-0152752 beschrieben sind, ist es erforderlich, dass an den Enden der Rohre nach dem Abtrennen auf die erforderliche Länge umfangsmässig verlaufende Rillen angebracht werden. Da derartige Rohre und auch Fittings am Aussenumfang durch das aufgebrachte Glasfaser-Laminat sehr ungleichmässig sind und eine zentrische Verbindung bezüglich des Innendurchmessers erforderlich ist, kann eine Einrichtung, wie sie vorgängig beschrieben wurde, nicht für derartige rohrförmige Teile verwendet werden.

Aufgabe der vorliegenden Erfindung ist die Schaffung einer Einrichtung der eingangs genannten Art, welche eine zum Innendurchmesser konzentrische Bearbeitung des Endes eines rohrförmigen Teiles gewährleistet, wobei die Einrichtung derart handlich ausgebildet sein soll, dass sie am jeweiligen Verlegungsort des Rohrleitungssystems verwendbar ist.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist in den beiliegenden Zeichnungen anhand von Ausführungsbeispielen dargestellt und nachfolgend beschrieben.

Es zeigen:

Fig. 1 einen Längsschnitt durch die Einrichtung,

Fig. 2 einen Schnitt entlang der Linie II-II von Fig. 1,

Fig. 3 eine Ausführungsvariante mit einer unterschiedlichen Innen-Spannvorrichtung für Fittings, teilweise im Längsschnitt und

Fig. 4 eine Teilansicht in Richtung X von Fig. 3.

Die Einrichtung weist eine Innen-Spannvorrichtung 1 auf, an welcher eine Bearbeitungsvorrichtung 2 zur Anbringung von umfangsmässigen Rillen 4 an einem aussen mit Glasfaser-Laminat 3a verstärkten Kunststoffrohr 3 angeordnet ist. Die Innen-Spannvorrichtung 1 weist einen Spannkörper 5 auf, der mit einem Ende bis zu einer Anschlagfläche 6 in das zu bearbeitende Rohr 3 gesteckt wird und mittels Spannbacken 7 festgespannt wird. Mehrere umfangsmässig verteilt angeordnete Spannbacken 7 sind in Schlitzen 8 des Spannkörpers 5 geführt und werden durch zwei zueinander axial verschiebbare gegeneinandergerichtete Konusteile 9 zum Spannen nach aussen gedrückt. Das eine Konusteil 9 steht mit einem Linksgewinde 10 und das andere Konusteil 9 mit einem Rechtsgewinde 11 einer Betätigungsstange 12 in Eingriff, wobei durch Drehen der Betätigungsstange 12 mittels eines Handgriffes 13 das axiale Verschieben der Konusteile 9 zueinander zum Spannen bzw. voneinander zum Lösen der Spannbacken erfolgt. Ueber dem Aussenumfang aller Spannbacken 7 sind in Nuten 14 liegend zwei Gummiringe 15 gespannt, welche durch ihre radiale Spannkraft beim Auseinanderfahren der Konusteile 9 die Spannbacken 7 nach innen - schieben. Die Spannbacken 7 sind vorzugsweise aus einem Kunststoff mit guten Haftreibungswerten hergestellt.

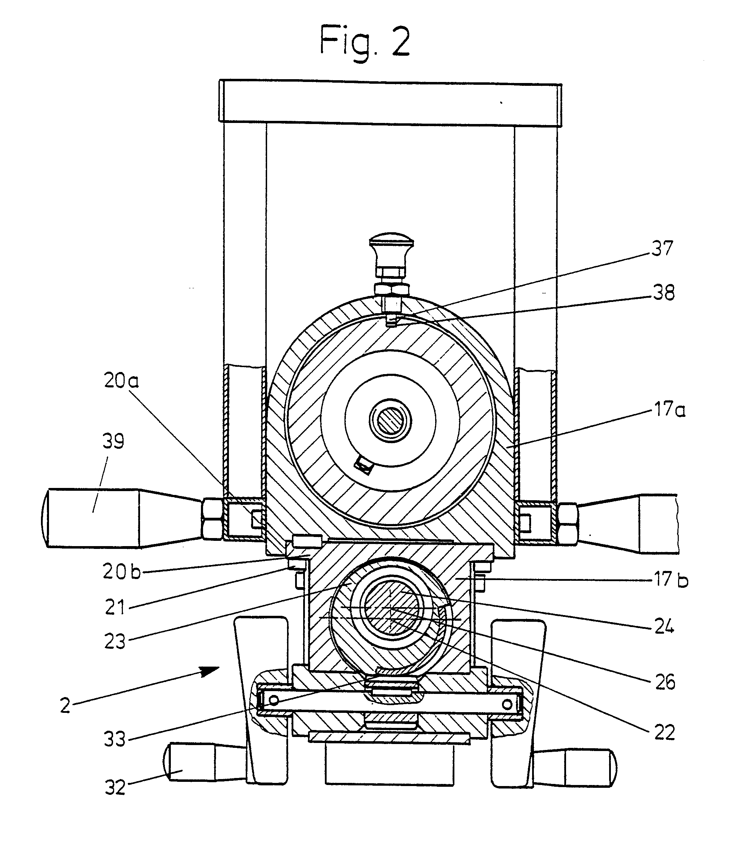

Der Spannkörper 5 weist einen Lagersitz 16 auf, auf welchem ein aus zwei Teilen 17a und 17b bestehender Drehkörper 17 mittels vorzugsweise aus Kunststoff bestehenden Gleitlagerringen 18 um die Achse 19 drehbar gelagert ist. Der am Spannkörper 5 gelagerte erste Teil 17a weist, wie aus Fig. 2 ersichtlich, eine Führungspartie 20a auf, in welcher der zweite Teil 17b mittels der Partie 20b seitlich fixiert und in axialer Richtung einstellbar mittels Schrauben 21 befestigt ist. Der Teil 17b des Drehkörpers 17 bildet die Halterung für die Bearbeitungsvorrichtung 2, wobei diese gesamthaft mit der Innen-Spannvorrichtung 1 lösbar und somit leicht auswechselbar verbunden ist. Im Teil 17b ist eine um eine Achse 22 verdrehbare Büchse 23 angeordnet, in welcher eine Antriebswelle 24 mittels Lagern 25 gelagert ist, deren Achse 26 exzentrisch zu der Achse 22 verläuft.

An einem Ende der Antriebswelle 24 ist das als Schleifwerkzeug 27 ausgebildete Bearbeitungswerkzeug befestigt und das andere Ende ist mittels einer Kupplung 28 mit der Abtriebswelle 29 eines Antriebsmotors 30 verbunden. Der Antriebsmotor 30 ist vorzugsweise eine elektrisch oder pneumatisch angetriebene Handbohrmaschine, welche mittels einer Klemmhalterung 31 an der verschwenkbaren Büchse 23 befestigt ist. Die Büchse 23 ist mittels eines durch Handkurbeln 32 betätigbaren Schneckenantriebes 33 vorzugsweise um 90 ° verschwenkbar, wobei eine entsprechend lange Nute 40 zusammen mit einem Anschlagnocken 41 die Festanschläge für die beiden Endstellungen der Büchse 23 bildet.

Das Schleifwerkzeug 27 besteht aus einem mit einem Rillenprofil 34 und einer zylindrischen Partie 35 versehenen metallischen Grundkörper 36, deren Aussenumfang segmentförmig mit Diamant-Splittern beschichtet ist. Die zwischen den einzelnen Segmenten bestehenden unbeschichteten Partien bilden in Achsrichtung verlaufende sogenannte Spannuten, welche eine bessere Ableitung der Schleifpartikel ermöglichen. Das Schleifwerkzeug 27 ist mit einer Schutzhaube 42 umgeben, an welcher ein Stutzen 43 zum Anschliessen einer Absaugvorrichtung für die Schleifpartikel angeordnet ist.

Nach dem Einschieben der Innen-Spannvorrichtung 1 in das zu bearbeitende Kunststoffrohr 3 wird die Einrichtung durch Drehen des Handgriffes 13 zentrisch zum Rohrinnendurch messer festgespannt. Dann wird der Antrieb für das Schleifwerkzeug eingeschaltet und durch Drehen an der Handkurbel 32 so weit zugestellt, bis die durch den Festanschlag gegebene Tiefe der Rillen 4 erreicht ist. Die Zustellbewegung ist bogenförmig mit einem Radius R, welcher der Exzentrizität der Achse 26 der Antriebswelle zur Achse 22 der Büchse entspricht. Während dieser Zustellbewegung ist der Drehkörper 17 und damit die Bearbeitungsvorrichtung 2 an der Innen-Spannvorrichtung 1 gegen Drehen mittels eines Arretierstiftes 37 gehalten. Nach dem Herausziehen des Arretierstiftes 37 aus der Bohrung 38 wird die Bearbeitungsvorrichtung 2 von Hand mit den Griffen 39 um das Rohr 3 gedreht, wodurch die Rillen 4 und ein Passitz 4a an dem Rohr 3 durch das Schleifwerkzeug 27 erzeugt werden.

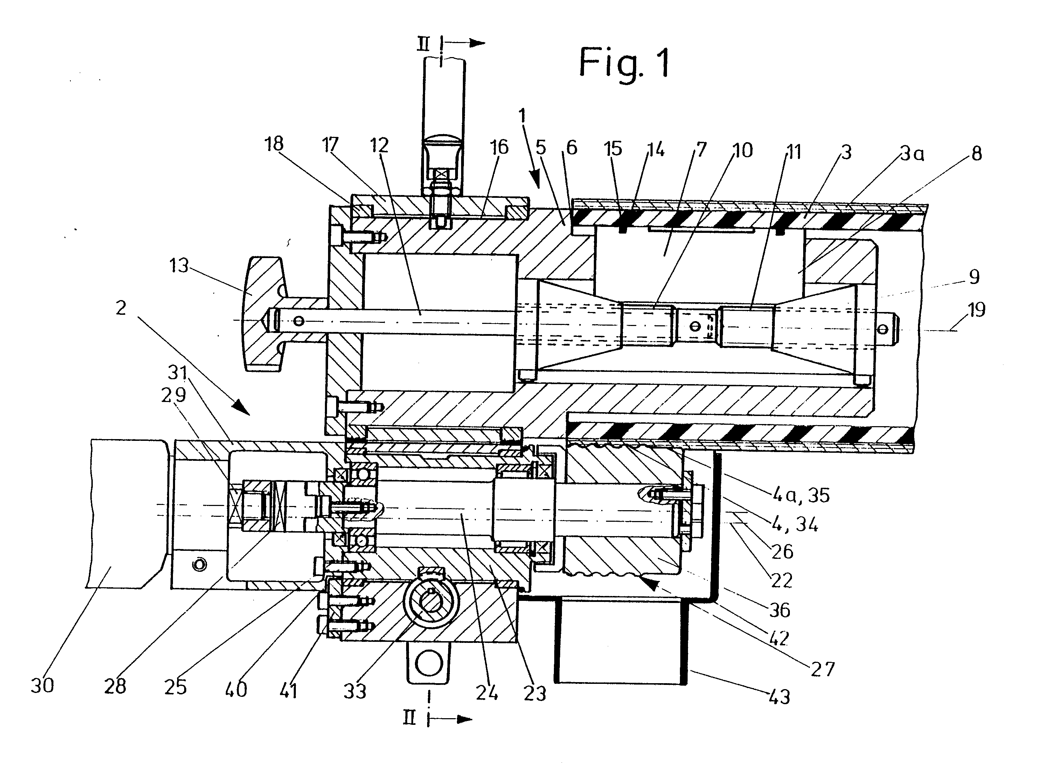

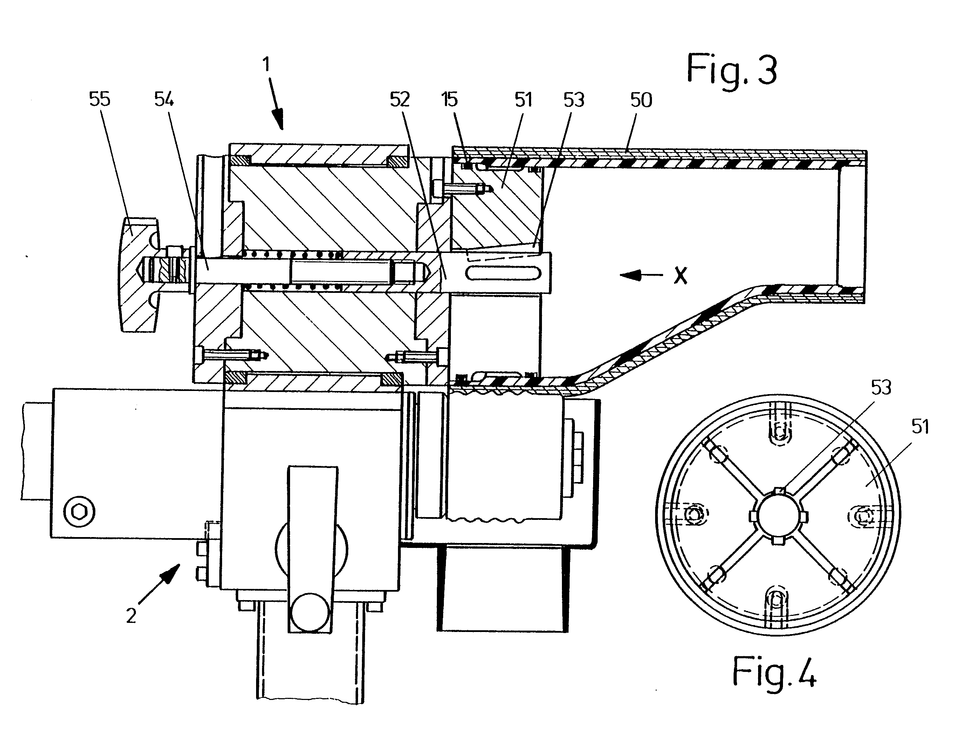

Die Fig. 3 und 4 zeigen eine Ausführungsvariante der Einrichtung, wobei die Innen-Spannvorrichtung 1 speziell für Fittings 50 mit einer kurzen zylindrischen Innenpartie ausgebildet ist. Die Bearbeitungsvorrichtung 2 entspricht der zu den Fig. 1 und 2 beschriebenen, wobei diese mit unterschiedlichen Innen-Spannvorrichtungen für Rohre oder Fittings mit unterschiedlichen Durchmessern verbunden werden kann. Die Spannbacken 51 sind wegen der geringen Länge segmentförmig ausgebildet und werden durch an einer Zugstange 52 angeordnete Keile 53 nach aussen gedrückt. Die Zugstange 52 wird mittels des an einer Gewindestange 54 angeordneten Handgriffes 55 axial verschoben. Gummiringe 15 drücken die Spannbacken 51 wieder nach innen.

Bei allen Ausführungsvarianten ist gewährleistet, dass Rillen, Nuten, Passitze oder ähnliche mechanische Formgebungen am Aussendruchmesser von Rohren oder Fittings durch die Innenspannung immer zentrisch zum Innendurchmesser der rohrförmigen Teile angebracht werden. Das Werkzeug kann auch als Fräs-oder Sägewerkzeug ausgebildet sein.

Die gesamte Einrichtung ist dabei so handlich ausgebildet, dass es jeweils an den Baustellen verwendet werden kann.

## Ansprüche

1. Einrichtung zur mechanischen Bearbeitung von Enden rohrförmiger Teile, insbesonders zur Anbringung von Rillen am Aussenumfang bei Kunststoffrohren und Fittings mit einem relativ zum Rohrumfang bewegbaren rotierenden Bearbeitungswerkzeug, welches in radialer Richtung zustellbar ist, dadurch gekennzeichnet, dass die Einrichtung eine sich am Rohrinnendurchmesser zentrierende Innen-Spannvorrichtung (1) aufweist und dass das Bearbeitungswerkzeug (27) an einem zentrisch zur Innen-Spannvorrichtung (1) drehbar gelagerten Drehkörper (17) angeordnet ist.

2. Einrichtung nach Anspruch 1, dadurch gekennzeichnet, dass eine Antriebswelle (24) des Bearbeitungswerkzeuges (27) exzentrisch in einer im Drehkörper (17) angeordneten verdrehbaren Büchse (23) gelagert ist.

3. Einrichtung nach Anspruch 2, dadurch gekennzeichnet, dass die Büchse (23) mittels eines Schneckentriebes (33) in einem Bereich zwischen zwei Festanschlägen (40, 41) verstellbar ist.

4. Einrichtung nach einem der Ansprüche 2 oder 3, dadurch gekennzeichnet, dass an der Büchse (23) ein elektrischer, pneumatischer oder hydraulischer Antriebsmotor (30) angeordnet ist.

5. Einrichtung nach einem der Ansprüche 1 bis 4, dadurch gekennzeichnet, dass das Bearbeitungswerkzeug ein umfangsmässig segmentförmig mit Diamantsplitter beschichtetes Schleifwerkzeug (27) ist.

6. Einrichtung nach Anspruch 5, dadurch gekennzeichnet, dass das Schleifwerkzeug (27) am Umfang ein Rillenprofil (34) und eine zylindrische Partie (35) aufweist.

7. Einrichtung nach einem der Ansprüche 1 bis 6, dadurch gekennzeichnet, dass die Innen-Spannvorrichtung (1) mehrere Spannbacken (7, 51) aufweist, welche durch mindestens ein zentrisch angeordnetes, axial verschiebbares Konusteil (9, 53) radial verschiebbar sind.

8. Einrichtung nach Anspruch 7, dadurch gekennzeichnet, dass zwei gegeneinander gerichtete Konusteile (9) angeordnet sind, welche mittels einer ein Linksgewinde (10) und ein Rechtsgewinde (11) aufweisenden Betätigungsstange (12) gegenläufig axial verschiebbar sind.

9. Einrichtung nach einem der Ansprüche 7 oder 8, dadurch gekennzeichnet, dass am Aussenumfang der Spannbacken (7, 51) mindestens zwei die Backen radial nach innen drückende Gummiringe (15) angeordnet sind.

10. Einrichtung nach einem der Ansprüche 1 bis 9, dadurch gekennzeichnet, dass das Bearbeitungswerkzeug (27) mit einer Schutzhaube (42) umgeben ist, welche einen Stutzen (43) für den Anschluss einer Absaugvorrichtung aufweist.

11. Einrichtung nach einem der Ansprüche 1 bis 10, dadurch gekennzeichnet, dass der Drehkörper (17) zweiteilig ausgebildet ist, wobei das eine Teil (17b) mit dem Bearbeitungswerkzeug (27) und dessen Antrieb (30) an dem an der Innen-Spannvorrichtung (1) angeordneten anderen Teil (17a) mittels Schrauben (21) auswechselbar befestigt ist.

Fig. 1

II

18 17 12 16 1 5 6 15 14 7 10 11 3 3a 8

13

9

19

2

31
29

4a, 35
4, 34
26
22
36
42
27

30 28 25 40 41 33 24 23 43

II

K.Nr. 2535/FIP

0 254 021

# Fig. 2

Fig. 3

Fig. 4

K.Nr. 2535/FIP

0 254 021